# EUROPÄISCHE PATENTSCHRIFT

(11) **EP 1 323 495 B1**
(45) Veröffentlichungstag und Bekanntmachung des Hinweises auf die Patenterteilung: **06.02.2008**
(21) Anmeldenummer: 02027798.4
(22) Anmeldetag: 12.12.2002
(51) Int. Cl.: B23Q 17/00, G08C 17/02, G01L 1/16, G01L 1/22, G01L 3/10

(54) **Verfahren und Vorrichtung zum Überwachen von Werkzeugen**
Monitoring method and device for tools
Méthode et dispositif de surveillance d'un outil

(30) Priorität: 21.12.2001 DE 10163734
(43) Veröffentlichungstag der Anmeldung: 02.07.2003
(73) Patentinhaber: Growth Finance AG, 6300 Zug (CH)
(72) Erfinder: Pflueg, Christian, 21423 Winsen (Luhe) (DE); Lütgens, Mirko, 29614 Soltau (DE)
(74) Vertreter: Weiss, Peter

(56) Entgegenhaltungen:
- EP-A- 0 901 881
- DE-A- 19 917 626
- DE-C- 4 229 569

## Beschreibung

Die Erfindung betrifft ein Verfahren zum Überwachen von Werkzeugen an einer Spindel oder einem Werkzeughalter, insbesondere von rotierenden Werkzeugen, sowie eine Vorrichtung hierfür.

Auf die Spindel einer Werkzeugmaschine wirken verschiedene physikalische Grössen ein. Zu nennen sind hierzu vor allem die Vorschubkraft, das Drehmoment und das Biegemoment. Gerade bei Mehrspindelmaschinen ist es deshalb wünschenswert, kritische Werkzeug- und Verfahrensfehler zu detektieren, um entweder den Betrieb der Werkzeugmaschinen entsprechend anzupassen oder Gegenmassnahmen zu treffen. Detektiert werden sollen vor allem fehlende Werkzeuge, gebrochene oder stark abgenutzte Werkzeuge.

In den bisherigen Werkzeugmaschinen geschieht entweder keine Überwachung dieser physikalischen Grösse oder aber jedem Bohrfutter ist ein eigener Sensor zugeordnet, der jedoch nur sehr begrenzt diese physikalischen Messgrössen erfassen und weitergeben kann. Wird ein neuer Messbereich benötigt, bedarf es eines neuen Sensors.

Aus der DE 42 29 569 C1 ist ein Verfahren der o.g. Art bekannt, wobei physikalische Grössen, wie beispielsweise Drehmoment, Kräfte, Beschleunigungen, Temperaturen, Drücke und Drehzahlen in Prüfständen, Getriebe, Motoren usw. erfasst werden. Diese werden berührungslos auf einen Stator übertragen.

Aus der DE 199 17 626 A1 ergibt sich ferner der Bedarf zur Nachstellung bestimmter Variabler in der Rotorelektronik, um den korrekten bzw. Sollbetrieb zu gewährleisten. Beispielsweise muss der Nullpunkt des Dehnungsmessstreifens und der Verstärkungsfaktor eingestellt werden. Dies kann durch einen bidirektionalen Datenaustausch erfolgen, wobei vorgeschlagen wird, in einen Mikroprozessor der Rotorelektronik ein Programm einzubauen, das diese geforderten Variablen selbstätig setzt und beim Empfang eines Befehls vom Stator ausgelöst wird.

Der vorliegenden Erfindung liegt die Aufgabe zugrunde, ein Verfahren und eine Vorrichtung der o. g. Art zu entwickeln, mit welchen auf einfachem Wege die o. g. physikalischer Grössen in einem grossen Messbereich sicher ermittelt werden können.

Zur Lösung dieser Aufgabe führt, die Merkmalskombination nach Anspruch 1 bzw. 8.

Das bedeutet, dass die entsprechenden physikalischen Messgrössen direkt mittels eines Sensors an dem rotierenden Bauteil (Spindel, Werkzeughalter oder Werkzeug) ermittelt werden. Dem rotierenden Bauteil selbst ist in einem vorbestimmten Abstand ein Stator zugeordnet, der nicht mitdreht, der aber berührungslos mit der rotierenden Elektronikeinheit kommunizieren, sie mit Strom versorgen sowie die aufbereiteten digitalen Signale empfangen kann.

Auf diese Weise kann bspw. bei einem Verfahren zum Gewindebohren ein Über- oder Unterdurchmesser der Gewindebohrung, eine nicht korrekte Gewindetiefe oder eine Abweichung im Vorschubmass ermittelt werden.

Das Verfahren wird in einer erfindungsgemässen Vorrichtung durchgeführt, wobei dem Sensor ein Stator zur Erzeugung eines elektrischen bzw. magnetischen Feldes und zur Übernahme der Signale berührungslos zugeordnet ist.

Als Sensor finden vor allem Dehnungsmessstreifen und piezoelektrische Sensoren Anwendung, wobei diese in einer Konfiguration, je nachdem, welche physikalische Messgrösse sie ermitteln sollen, angeordnet sind.

Die auf dem rotierenden Bauteil angebrachten Sensoren wandeln die mechanischen Messgrössen in eine proportionale elektrische Grösse um. Das Signal wird einer programierbaren Verstärkereinheit zugeführt, die wiederum von einem, auch auf dem Rotor befindlichen Mikroprozessor gesteuert wird. Das verstärkte Signal wird auf dem Rotor digitalisiert und mittels Lastmodulation vom Rotor zum Stator gesendet. Zu diesem Zweck besitzen Rotor und Stator Spulen zum Aufbau des elektromagnetischen Feldes und bilden einen Transformator zur berührungslosen induktiven Energieübertragung vom Stator zum Rotor hin. Die modulierten Signale vom Stator werden zu einem stationären Hauptverstärker geleitet, wo sie demoduliert und ausgewertet werden. Die Steuerung des Mikroprozessors auf dem rotierenden Bauteil geschieht wiederum berührungslos mittels Lastmodulation von Steuersignalen aus dem Prozessor des Hauptverstärkers von der stationären Einheit, der mit dem Stator verbunden ist.

Ist das Messsignal zu klein oder zu gross, wird im umgekehrten Weg vom stationären Hauptverstärker ein Befehl ausgegeben, moduliert und über das Feld zum Mikroprozessor auf dem Rotor geschickt, um die programmierbare Verstärkung des analogen Messsignals so einzustellen, dass der optimale Messbereich gewählt wird, bevor das Signal digitalisiert wird. Die Sensoreinrichtung kann sich somit selbst auf einen optimalen Messbereich bringen, wodurch ein adaptives System geschaffen ist.

Die grundsätzliche Idee ist, dass die Sensoreinrichtung flexibel digital konfigurierbar ist und mit dem in der Sensoreinrichtung sitzenden Mikroprozessor berührungslos kommuniziert werden kann, um einen optimalen Messbereich zu erhalten. Dank der digitalen Übertragung wird die Unabhängigkeit vom Rauschen gewährleistet.

Bevorzugt wird mit einer Übertragungsfrequenz unterhalb 125 kHz gearbeitet, da dieser Bereich international freigegeben ist.

Bei diesem berührungslosen Übertragen der Signale entfällt die Notwendigkeit für eine eigene Stromversorgung, bspw. für Batterien, und für einen regelmässigen Service, da nur eine äusserst geringe Beanspruchung der einzelnen Elemente der erfindungsgemässen Vorrichtung gegeben ist. Die erfindungsgemässe Vorrichtung liefert akkurate Informationen über die gewünschten Messgrössen.

Das System ist auf Grund der berührungslosen Übertragung von Energie, Steuer- und Messsignalen wartungsfrei.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Seitenansicht von zwei Ausführungsbeispielen von Teilen der erfindungsgemässen Vorrichtung zum Überwachung von Werkzeugen;
Figur 2 eine blockschaltbildliche Darstellung der erfindungsgemässen Vorrichtung zum Überwachen von Werkzeugen;
Figur 3 eine Draufsicht auf Teile der erfindungsgemässen Vorrichtung;
Figur 4 eine teilweise dargestellte Seitenansicht von Elementen der erfindungsgemässen Vorrichtung entsprechend Figur 3;
Figur 5 eine Stirnansicht eines Stators;
Figur 6 einen schematischen Längsschnitt durch Teile der erfindungsgemässen Vorrichtung entsprechend Figur 4.

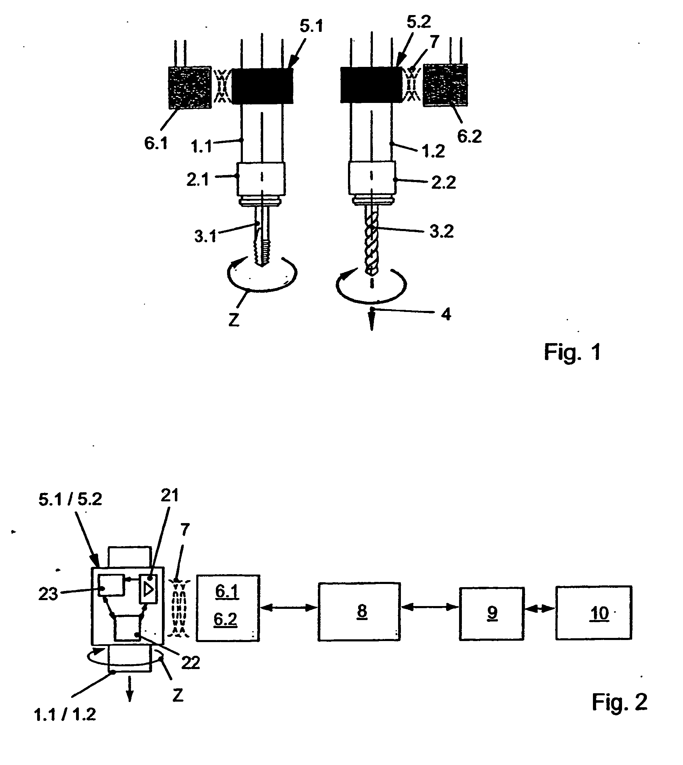

In Figur 1 sind zwei Werkzeughalter 1.1 und 1.2 erkennbar, welche über jeweils einen Werkzeugadapter 2.1 und 2.2 ein Werkzeug 3.1 und 3.2 halten. Bei dem Werkzeug 3.1 handelt es sich um einen Gewindebohrer, bei dem Werkzeug 3.2 um einen Bohrer.

Die Werkzeuge drehen in Richtung z, wobei sie in ein nicht näher gezeigtes Werkstück abgesenkt werden. Dies ist für das Werkzeug 3.2 durch den Pfeil 4 angedeutet.

Bei Betätigung des Werkzeughalters 1.1, 1.2 wirkt auf den Werkzeughalter eine Vorschubkraft, ein Drehmoment und ggf. ein Biegemoment ein. Zur Erkennung dieser Einflüsse ist der Spindel 1.1, 1.2 eine Sensoreinrichtung 5.1, 5.2 zugeordnet, welche mit der Spindel 1.1 und 1.2 dreht. Für jede Sensoreinrichtung 5.1, 5.2 ist wiederum ein Stator 6.1 bzw. 6.2 zur Übernahme von entsprechenden Signalen aus der Sensoreinrichtung 5.1, 5.2 vorgesehen, wobei die Übertragung der Signale mittels Telemetrie erfolgt. Entsprechende elektrische bzw. magnetische Felder 7 sind gestrichelt angedeutet.

In Figur 2 ist erkennbar, dass der Stator 6.1/6.2 mit einem Hauptverstärker 8, dieser mit einem Werkzeugmonitor 9 und dieser mit einem Prozessor 10 in Verbindung steht.

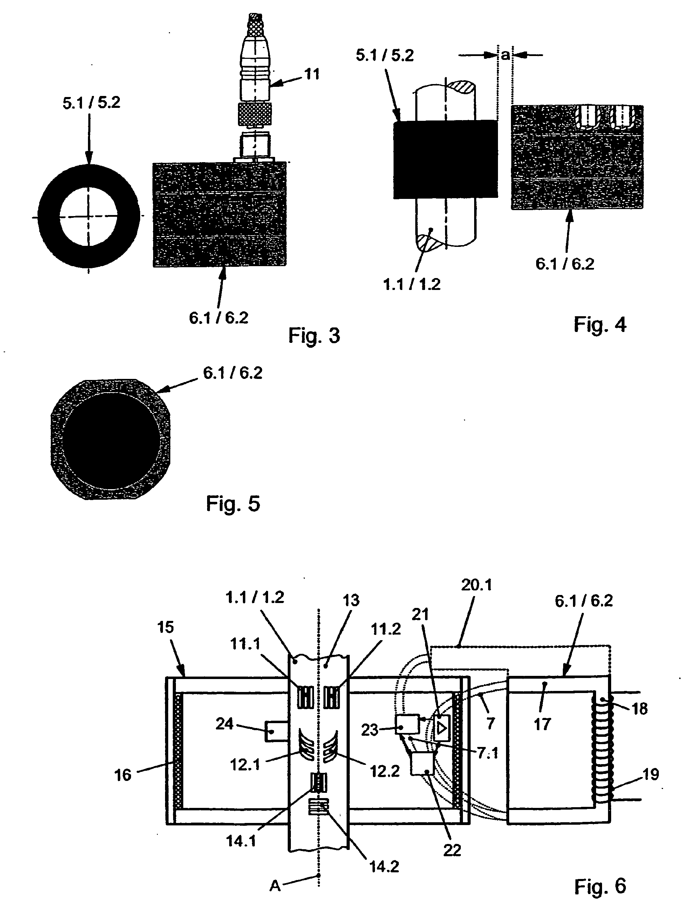

In den Figuren 3 bis 5 sind Sensoreinrichtung 5.1/5.2 und Stator 6.1/6.2 vergrössert dargestellt. Dabei hält der Stator 6.1/6.2 von der Sensoreinrichtung 5.1/5.2 einen Abstand a ein. Mit 11 ist ein Anschlussstecker für einen Anschluss an den Hauptverstärker 8 gekennzeichnet.

Die verschiedenen Messgrössen, die oben erwähnt sind, werden mittels Sensoren erfasst. Im vorliegenden Ausführungsbeispiel handelt es sich um einen Vibrationsmesser 24 und/oder um Dehnmessstreifen, wobei die Dehnmessstreifen 11.1 und 11.2 (siehe Figur 6) parallel zur Längsachse A der Spindel angeordnet sind. Die Dehnmessstreifen 12.1 und 12.2 für das Drehmoment sind unter einem Winkel von 45° zur Längsachse der Spindel angeordnet. Die Dehnmessstreifen 14.1 und 14.2 verlaufen dagegen teilweise achsparallel, teilweise quer dazu. Sie dienen der Aufnahme der Vorschubkraft. Der Schwingungsaufnehmer (24) ist auf dem Werkzeughalter (1.1, 1.2) oder auf der Spindel angebracht.

Der gesamte Bereich der Sensoren und Elektronik wird von einem Ringgehäuse (15) umgeben, in welchem eine Spulenwicklung (16) abgeschirmt von der Elektronik vorgesehen ist, die nicht näher gezeigt mit der Elektronik in Verbindung steht.

Der Stator 6.1/6.2 weist einen Ringanker 17 auf, bei dem ein Joch 18 ausgebildet ist, auf das eine Spule 19 aufgewickelt ist. Diese Spule 19 steht mit dem oben erwähnten Hauptverstärker 8 in Verbindung.

In den Figuren 2 und 6 ist erkennbar, dass auch in der rotierenden Sensoreinrichtung 5.1/5.2 ein Verstärker 21 integriert ist, der von einem sich ebenfalls in der Sensoreinrichtung 5.1/5.2 befindlichen Mikroprozessor 22 gesteuert wird.

Die Funktionsweise der vorliegenden Erfindung ist folgende:

An die Spule 19 wird eine Spannung mit einer Frequenz von unterhalb 125 kHz angelegt und ein elektrisches Feld 7 erzeugt, mittels dem auch die Spulenwicklung 16 angeregt wird.

Das Messsignal vom Sensor 11.1, 11.2 wird einer programmierbaren Verstärkereinheit 21 zugeführt, die wiederum von einem auch auf dem Rotor befindlichen Mikroprozessor 22 gesteuert wird. Das verstärkte Signal wird auf dem Rotor digitalisiert (A/D-Wandler 23) und mittels Lastmodulation vom Rotor zum Stator gesendet. Die modulierten Signale vom Stator werden zu einem stationären Hauptverstärker 8 geleitet, wo sie demoduliert und ausgewertet werden. Die vom Hauptverstärker 8 abgegebenen Signale können aufbereitet mittels einer entsprechenden Software über den Prozessor 10 auf dem Werkzeugmonitor dargestellt werden.

Wie oben erwähnt, ist auch in der Sensoreinrichtung 5.1/5.2 ein Verstärker 21 integriert, der von dem Mikroprozessor 22 gesteuert wird. Durch die Abschwächung/Verstärkung des nur punktiert angedeuteten elektromagnetischen Feldes 7 erhält der Mikroprozessor Befehle zur Einstellung der gewünschten Verstärkung des analogen Messsignals. Das Messsignal wird dann in der Sensoreinrichtung 5.1/5.2 digitalisiert und moduliert über das Feld 7 zum Stator 6.1/6.2 zurückgesandt, wo es abschliessend im externen Hauptverstärker 8 demoduliert und ausgewertet wird.

Ist das Messsignal zu klein oder zu gross wird im umgekehrten Weg vom externen Hauptverstärker 8 ein Befehl ausgegeben, moduliert und über das Feld 7 zum Mikroprozessor 22 in der Sensoreinrichtung 5.1/5.2 geschickt, um die Verstärkung des analogen Signals so einzustellen, dass der optimale Messbereich gewählt wird.

Durch die Regelung des Verstärkers ist ein adaptives System möglich, d. h., durch die Regelung des Verstärkers kann der Sensor sich selbst auf den optimalen Messbereich bringen.

Die Verstärkungseinstellung des Verstärkers 21 in der Sensoreinrichtung 5.1/5.2 kann auch manuell verändert und eingestellt werden, ohne ein vorhergehendes Messsignal zu haben.

In Figur 6 ist erkennbar, dass bevorzugt zumindest ein Teil 20.1 des Ankers das Ringgehäuse 15 der Sensoreinrichtung übergreift. Hierdurch wird ein strichpunktiert angedeutetes Feld 7.1 erzeugt, welches die Spulenwicklung 16 besser einhüllt.

| **Positionszahlenliste** | | | | | |
|---|---|---|---|---|---|
| 1 | Werkzeughalter | 34 | | 67 | |
| 2 | Werkzeugadapter | 35 | | 68 | |
| 3 | Werkzeug | 36 | | 69 | |
| 4 | Pfeil | 37 | | 70 | |
| 5 | Sensoreinrichtung | 38 | | 71 | |
| 6 | Stator | 39 | | 72 | |
| 7 | Elektrische bzw. Magentische Felder | 40 | | 73 | |
| 8 | Hauptverstäker | 41 | | 74 | |
| 9 | Werkzeugmonitor | 42 | | 75 | |
| 10 | Prozessor | 43 | | 76 | |
| 11 | Dehnmessstreifen (Biegung) | 44 | | 77 | |
| 12 | Dehnmessstreifen (Drehmoment) | 45 | | 78 | |
| 13 | Aufnahmebohrung | 46 | | 79 | |
| 14 | Dehnmessstreifen (Vorschub) | 47 | | | |
| 15 | Ringgehäuse | 48 | | | |
| 16 | Spulenwicklung | 49 | | | |
| 17 | Ringanker | 50 | | | |
| 18 | Joch | 51 | | | |
| 19 | Spule | 52 | | | |
| 20 | Teil | 53 | | | |
| 21 | Verstärker | 54 | | | |
| 22 | Mikroprozessor | 55 | | | |
| 23 | A/D-Wandler | 56 | | H | Längsachse |
| 24 | Vibrationssensor | 57 | | a | Abstand |
| 25 | | 58 | | | |
| 26 | | 59 | | | |
| 27 | | 60 | | Z | Drehrichtung |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Überwachen von Werkzeugen (3.1, 3.2) an einer Spindel oder einem Werkzeughalter (1.1, 1.2), insbesondere von rotierenden Werkzeugen, wobei physikalische Grössen, wie Drehmoment und/oder Vorschubkraft und/oder Biegemoment und/oder Schwingungen mit zumindest einem Sensor (11.1, 11.2, 12.1, 12.2, 14.1, 14.2, 24) in einer Sensoreinrichtung (5.1, 5.2) ermittelt und berührungslos auf einen Stator (6.1, 6.2) übertragen werden, nach. dem eine Aufbereitung der entsprechenden Signale in einem Hauptverstärker (8), der, wenn das Messsignal zu klein oder zu gross ist, einen Befehl durchgeführt wird, wobei die Sensoreinrichtung (5.1, 5.2) berührungslos digital konfiguriert wird von einem Prozessor des Hauptverstärkers (8), der einen Befehl ausgibt, welcher moduliert über den Stator (6.1, 6.2) zu einem Mikroprozessor (22) der Sensoreinrichtung (5.1, 5.2) geschickt wird, wodurch eine Anpassung des Messbereichs in der Sensoreinrichtung (5.1, 5.2) durchgeführt wird.

2. Verfahren nach Anspruch 1, **dadurch gekennzeichnet, dass** die Sensoreinrichtung (5.1, 5.2) mit dem Stator (6.1, 6.2) von aussen her berührungslos kommuniziert und von ihm angesteuert und/oder gespeist wird.

3. Verfahren nach Anspruch 1 oder 2, **dadurch gekennzeichnet, dass** zwischen Stator (6.1, 6.2) und Sensoreinrichtung (5.1, 5.2) ein elektrisches bzw. elektromagnetisches Feld aufgebaut wird.

4. Verfahren nach einem der Ansprüche 1 bis 3, **dadurch gekennzeichnet, dass** eine Verstärkung des analogen Messsignals in der Sensoreinrichtung (5.1, 5.2) von aussen berührungslos digital konfigurierbar ist, so das eine Einstellung eines analogen Messsignals auf den optimalen Messbereich mit Signalabgleich erfolgt, bevor das Signal digitalisiert und moduliert übertragen wird.

5. Verfahren nach Anspruch 4, **dadurch gekennzeichnet, dass** das digitale Messsignal übertragen wird, wodurch eine Unabhängigkeit vom Rauschen gewährleistet ist.

6. Verfahren nach wenigstens einem der Ansprüche 1 bis 5, **dadurch gekennzeichnet, dass** die Signale nach dem Stator (6.1, 6.2) in dem Verstärker (8) demoduliert und ausgewertet werden.

7. verfahren nach wenigstens einem der Ansprüche 1 bis 6, **dadurch gekennzeichnet, dass** der Verstärker (8), intelligent aufgebaut mit dem Prozessor (10), die Messsignale auswertet und die Sensoreinrichtung (5.1, 5.2) ansteuert, indem Konfigurationsbefehle zum Mikroprozessor (22) der Sensoreinrichtung (5.1, 5.2) gesendet werden.

8. Vorrichtung zum Überwachen von Werkzeugen (3.1, 3.2) an einer Spindel oder einem Werkzeughalter (1.1, 1.2), insbesondere von rotierenden Werkzeugen, wobei der Spindel oder dem Werkzeughalter (1.1, 1.2) zumindest ein Sensor (11.1, 11.2, 12.1, 12.2, 14.1, 14.2, 24) in einer Sensoreinrichtung (5.1, 5.2) zur Ermittlung von physikalischen Grössen, wie Drehmoment und/oder Vorschubkraft und/oder Biegemoment und/oder Schwingungen, und diesem wiederum ein Stator (6.1, 6.2) zur Erzeugung eines elektrischen bzw. elektromagnetischen Feldes (7) und zur Übernahme der Signale berührungslos zugeordnet ist, wobei ein Hauptverstärker (8) zur Aufbereitung der übertragenen Signale vorgesehen ist, **dadurch gekennzeichnet, dass** die Sensoreinrichtung (5.1, 5.2) berührungslos digital, konfigurierbar von einem Prozessor des Hauptverstärkers (8) ist, von welchem , wenn das Messsignal zu klein oder zu gross ist, ein Befehl modulierbar über den Stator (6.1, 6.2) zu einem Mikroprozessor (22) der Sensoreinrichtung (5.1, 5.2) übermittelbar ist, wodurch eine Anpassung des Messbereichs in der Sensoreinrichtung (5.1, 5.2) durchführbar ist.

9. Vorrichtung nach Anspruch 8, **dadurch gekennzeichnet, dass** die Sensoreinrichtung (5.1, 5.2) Dehnungsmessstreifen (11.1, 11.2, 12.1, 12.2, 14.1, 14.2) oder piezoelektrische Sensoren (24) aufweist, welche an oder in der Spindel bzw. dem Werkzeughalter (1.1, 1.2) angeordnet sind.

10. Vorrichtung nach Anspruch 8 oder 9, **dadurch gekennzeichnet, dass** der Sensoreinrichtung (5.1, 5.2) eine spulenwicklung (16) zugeordnet ist.

11. Vorrichtung nach einem der Ansprüche B bis 10, **dadurch gekennzeichnet, dass** dem Sensor (11.1, 11.2, 12.1, 12.2, 14.1, 14.2, 24) ein programmierbarer Verstärker (21), ein A/D-Wandler (23) und diesem ein Mikroprozessor (22) zugeordnet ist.

12. Vorrichtung nach einem der Ansprüche 8 bis 11, **dadurch gekennzeichnet, dass** der Stator (6.1, 6.2) einen Anker (17) aufweist, der zumindest teilweise von einer Spule (19) umfangen ist.

13. Vorrichtung nach Anspruch 12, **dadurch gekennzeichnet, dass** der Anker (17) die dem Sensor zugeordnete Spulenwicklung (16) zumindest teilweise übergreift.

14. Vorrichtung nach Anspruch 12 oder 13, **dadurch gekennzeichnet, dass** die Spule (19) des Stators (6.1, 6.2) mit dem Verstärker (8) verbunden ist, der die Sensoreinrichtung (5.1, 5.2) ansteuert.

## Claims

1. Method of monitoring tools (3.1, 3.2) on a spindle or tool holder (1.1, 1.2), in particular rotating tools, wherein physical quantities, such as torque and/or feed force and/or bending moment and/or vibrations are determined by at least one sensor (11.1, 11.2, 12.1, 12.2, 14.1, 14.2, 24) in a sensor device (5.1, 5.2) and transmitted contactlessly (11.1, 11.2, 12.1, 12.2, 14.1, 14.2, 24) to a stator (6.1, 6.2), after which a conditioning of the corresponding signals is effected in a main amplifier (8), wherein the sensor device (5.1, 5.2) is contactlessly digitally configured by a processor of the main amplifier (8), which, if the measuring signal is too small or too large, outputs a command that is modulated and sent by the stator (6.1, 6.2) to a microprocessor (22) of the sensor device (5.1, 5.2), with the result that an adaptation of the measuring range is carried out in the sensor device (5.1, 5.2).

2. Method according to claim 1, **characterized in that** the sensor device (5.1, 5.2) externally contactlessly communicates with, and is controlled and/or supplied by, the stator (6.1, 6.2).

3. Method according to claim 1 or 2, **characterized in that** an electric and/or electromagnetic field is built up between stator (6.1, 6.2) and sensor device (5.1, 5.2).

4. Method according to one of claims 1 to 3, **characterized in that** an amplification of the analogue measuring signal in the sensor device (5.1, 5.2) is externally contactlessly digitally configurable, so that a setting of an analogue measuring signal to the optimum measuring range is effected with signal adjustment, before the signal is transmitted in digitized and modulated form.

5. Method according to claim 4, **characterized in that** the digital measuring signal is transmitted, thereby guaranteeing an independence from noise.

6. Method according to at least one of claims 1 to 5, **characterized in that** the signals after the stator (6.1, 6.2) are demodulated and evaluated in the amplifier (8).

7. Method according to at least one of claims 1 to 6, **characterized in that** the amplifier (8), constructed intelligently with the processor (10), evaluates the measuring signals and controls the sensor device (5.1, 5.2) **in that** configuration commands are transmitted to the microprocessor (22) of the sensor device (5.1, 5.2).

8. Device for monitoring tools (3.1, 3.2) on a spindle or tool holder (1.1, 1.2), in particular rotating tools, wherein with the spindle or the tool holder (1.1, 1.2) at least one sensor (11.1, 11.2, 12.1, 12.2, 14.1, 14.2, 24) in a sensor device (5.1, 5.2) for determining physical quantities, such as torque and/or feed force and/or bending moment and/or vibrations, and with said sensor in turn a stator (6.1, 6.2) for generating an electric and/or electromagnetic field (7) and for accepting the signals are contactlessly associated, wherein a main amplifier (8) is provided for conditioning the transmitted signals, **characterized in that** the sensor device (5.1, 5.2) is contactlessly digitally configurable by a processor of the main amplifier (8), by which, if the measuring signal is too small or too large, a command may be modulated and communicated by the stator (6.1, 6.2) to a microprocessor (22) of the sensor device (5.1, 5.2), with the result that an adaptation of the measuring range may be carried out in the sensor device (5.1, 5.2).

9. Device according to claim 8, **characterized in that** the sensor device (5.1, 5.2) comprises expansion measuring strips (11.1, 11.2, 12.1, 12.2, 14.1, 14.2) or piezoelectric sensors (24), which are disposed on or in the spindle and/or tool holder (1.1, 1.2).

10. Device according to claim 8 or 9, **characterized in that** a coil winding (16) is associated with the sensor device (5.1, 5.2).

11. Device according to one of claims 8 to 10, **characterized in that** there is associated with the sensor (11.1, 11.2, 12.1, 12.2, 14.1, 14.2, 24) a programmable amplifier (21), an analogue-digital converter (23) and, with the latter, a microprocessor (22).

12. Device according to one of claims 8 to 11, **characterized in that** the stator (6.1, 6.2) comprises an armature (17) that is at least partially embraced by a coil (19).

13. Device according to claim 12, **characterized in that** the armature (17) at least partially overlaps the coil winding (16) associated with the sensor.

14. Device according to claim 12 or 13, **characterized in that** the coil (19) of the stator (6.1, 6.2) is connected to the amplifier (8) that controls the sensor device (5.1, 5.2).

## Revendications

1. Procédé de surveillance d'outils (3.1, 3.2) sur une broche ou un porte-outil (1.1, 1.2), en particulier d'outils rotatifs, des grandeurs physiques, telles que couple de rotation et/ou force d'avance et/ou couple de flexion et/ou oscillations, étant déterminées par au moins un capteur (11.1, 11.2, 12.1, 12.2, 14.1, 14.2, 24) dans un dispositif de détection (5.1, 5.2) étant transmises sans contact à un stator (6.1, 6.2) après qu'un traitement des signaux correspondants soit effectué dans un amplificateur principal (8), le dispositif de détection (5.1, 5.2) étant configuré numériquement sans contact par un processeur de l'amplificateur principal (8) qui sort une commande qui est envoyée modulée par l'intermédiaire du stator (6.1, 6.2) à un microprocesseur (22) du dispositif de détection (5.1, 5.2), d'où est effectuée une adaptation de la plage de mesure dans le dispositif de détection (5.1, 5.2).

2. Procédé selon la revendication 1, **caractérisé par le fait que** le dispositif de détection (5.1, 5.2) communique sans contact de l'extérieur avec le stator (6.1, 6.2) et est activé et/ou alimenté par ce dernier.

3. Procédé selon la revendication 1 ou 2, **caractérisé par le fait qu'**entre le stator (6.1, 6.2) et le dispositif de détection (5.1, 5.2) est créé un champ électrique ou électromagnétique.

4. Procédé selon l'une des revendications 1 à 3, **caractérisé par le fait qu'**une amplification du signal de mesure analogique dans le dispositif de détection (5.1, 5.2) peut être configuré numériquement sans contact de l'extérieur, de sorte qu'ait lieu un réglage d'un signal de mesure analogique à la plage de mesure optimale avec correction de signal, avant que le signal ne soit transmis numérisé et modulé.

5. Procédé selon la revendication 4, **caractérisé par le fait qu'**est transmis le signal de mesure numérique, d'où est garantie une indépendance du bruit.

6. Procédé selon au moins l'une des revendications 1 à 5, **caractérisé par le fait que** les signaux sont, après le stator (6.1, 6.2), démodulés et évalués dans l'amplificateur (8).

7. Procédé selon au moins l'une des revendications 1 à 6, **caractérisé par le fait que** l'amplificateur (6), construit de manière intelligente avec le processeur (10), évalue les signaux de mesure et active le dispositif de détection (5.1, 5.2) en envoyant des commandes de configuration au microprocesseur (22) du dispositif de détection (5.1, 5.2).

8. Dispositif de surveillance d'outils (3.1, 3.2) sur une broche ou un porte-outil (1.1, 1.2), en particulier d'outils rotatifs, à la broche ou au porte-outil (1.1, 1.2) étant associé au moins un capteur (11.1, 11.2, 12.1, 12.2, 14.1, 14.2, 24) dans un dispositif de détection (5.1, 5.2) pour déterminer des grandeurs physiques, telles que couple de rotation et/ou force d'avance et/ou couple de flexion et/ou oscillations, et à ce dernier étant associé, à son tour, sans contact un stator (6.1, 6.2) pour générer un champ électrique ou électromagnétique (7) et pour recevoir les signaux, un amplificateur principal (8) étant prévu pour le traitement des signaux transmis, **caractérisé par le fait que** le dispositif de détection (5.1, 5.2) peut être configuré numériquement sans contact par un processeur de l'amplificateur principal (8) par lequel peut être transmise, lorsque le signal de mesure est trop petit ou trop grand, une commande de manière modulable par l'intermédiaire du stator (6.1, 6.2) à un microprocesseur (22) du dispositif de détection (5.1, 5.2), d'où peut être effectuée une adaptation de la plage de mesure dans le dispositif de détection (5.1, 5.2).

9. Dispositif selon la revendication 8, **caractérisé par le fait que** le dispositif de détection (5.1, 5.2) présente des bandes de mesure de dilatation (11.1, 11.2, 12.1, 12.2, 14.1, 14.2) ou des capteurs piézoélectriques (24) qui sont disposés sur ou dans la broche ou le porte-outil (1.1, 1.2).

10. Dispositif selon la revendication 8 ou 9, **caractérisé par le fait qu'**au dispositif de détection (5.1, 5.2) est associée une spire de bobine (16).

11. Dispositif selon l'une des revendications 9 à 10, **caractérisé par le fait qu'**au capteur (11.1, 11.2, 12.1, 12.2, 14.1, 14.2, 24) sont associés un amplificateur programmable (21), un convertisseur A/N (23) et, à ce dernier, un microprocesseur (22).

12. Dispositif selon l'une des revendications 8 à 11, **caractérisé par le fait que** le stator (6.1, 6.2) présente un noyau d'électro-aimant (17) qui est entouré au moins partiellement d'une bobine (19).

13. Dispositif selon la revendication 12, **caractérisé par le fait que** le noyau d'électro-aimant (17) vient au moins partiellement en prise par-dessus la spire de bobine (16) associée au capteur.

14. Dispositif selon la revendication 12 ou 13, **caractérisé par le fait que** la bobine (19) du stator (6.1, 6.2) est reliée à l'amplificateur (8) qui active le dispositif de détection (5.1, 5.2).
